# EUROPÄISCHE PATENTSCHRIFT

(11) **EP 1 554 771 B1**
(45) Veröffentlichungstag und Bekanntmachung des Hinweises auf die Patenterteilung: **02.03.2011**
(21) Anmeldenummer: 03750671.4
(22) Anmeldetag: 01.10.2003
(51) Int. Cl.: H01M 10/0569

(54) **VERWENDUNG VON POLYFLUORPOLYETHERN ALS FLAMMSCHUTZMITTEL FÜR BATTERIEN**
USE OF POLYFLUORIDE POLYETHERS
UTILISATION DE POLYETHERS POLYFLUORES

(30) Priorität: 12.10.2002 DE 10247675
(43) Veröffentlichungstag der Anmeldung: 20.07.2005
(73) Patentinhaber: Solvay Fluor GmbH, 30173 Hannover (DE)
(72) Erfinder: Böse, Olaf, 30167 Hannover (DE); Fenseleau, Katja, 30449 Hannover (DE)
(74) Vertreter: Jacques, Philippe
(86) Internationale Anmeldenummer: PCT/EP2003/010894
(87) Internationale Veröffentlichungsnummer: WO 2004/036682

(56) Entgegenhaltungen:
- EP-A- 0 757 399
- EP-A- 0 807 986
- EP-A- 1 039 570
- US-A1- 2001 010 877

## Beschreibung

Die Erfindung betrifft eine neue Verwendung für Polyfluorpolyether und deren Gemische, sowie Gemische die ein oder mehrere Polyfluorpolyether enthalten, als schwerentflammbare Lösungsmittel für Elektrolyte in wiederaufladbaren Batterien.

Es ist bekannt, daß man organische Lösungsmittel mit stark polarisierenden Heteroatomen, z. B. Stickstoff, Sauerstoff oder Schwefel, zur Herstellung aprotischer Elektrolytlösungen verwendet. Häufig werden Alkylcarbonate oder Alkylencarbonate (EP-A 0 643 433) oder Pyrocarbonate (US-A 5,427,874) eingesetzt.

Alkylacetate, substituierte Acetamide, Sulfoxide, Nitrile, Glykolether und Ether sind ebenfalls geeignet (EP-A 0 385 724).

Als Kriterium der Anwendbarkeit als geeignete Lösungsmittel sind ein hoher Flammpunkt und hohe Explosionsgrenzen zu nennen.

Wiederaufladbare Lithiumbatterien müssen einem hohen Sicherheitsstand genügen, da kritische Betriebszustände wie Überladen, Überentladen oder Kurzschluß, die durchaus zur Öffnung der Zelle unter Feuererscheinung führen können, vermieden werden müssen.

Wenig entflammbar beziehungsweise wenig zur Bildung explosiver Gemische neigend sind schwerflüchtige, allerdings leider auch hochviskose Lösungsmittel wie Propylencarbonat oder Ethylencarbonat.

Aufgrund der hohen Viskosität ist die elektrische Leitfähigkeit der mit diesen Lösungsmitteln hergestellten Elektrolytlösungen z. B. bei tieferen Temperaturen gering. Außerdem sind in solchen Lösungen sowohl die Ionenwanderung als auch andere Stofftransportvorgänge verlangsamt. Zum Erzielen höherer Leitfähigkeiten verwendet man daher Lösungsmittelgemische, die eine niedrigviskose Komponente als "Verdünner" aufweisen. Geeignete niedrigviskose Verbindungen sind z. B. 1,2-Dimethoxyethan oder lineare Alkylcarbonate wie Dimethylcarbonat, Ethylmethylcarbonat und Diethylcarbonat.

Nachteil dieser Verbindungen sind jedoch die kleinen Dielektrizitätskonstanten sowie deren Flüchtigkeit und dem damit verbundenen Zünd- und Explosionsverhalten.

Zur Erhöhung der Sicherheit der Batterien wird daher der Zusatz von flammhemmenden phosphor- oder halogenhaltigen Additiven empfohlen. So wurden fluorierte Ether und Perfluoralkane für das Elektrolytsystem von Lithiumbatterien vorgeschlagen (EP 0 807 986, EP 0 631 339, JP-A 7-249432). Derartige Verbindungen sind zwar thermisch und chemisch stabil, sie sind jedoch nicht gut mit batterieüblichen Lösungsmitteln mischbar oder haben ein schlechtes Lösevermögen für die üblichen Lithiumleitsalze.

Aufgabe der vorliegenden Erfindung ist es, ein Lösungsmittelgemisch für Leitsalze zur Verfügung zu stellen, mit dem die Sicherheit der Elektrolytlösungen und der damit gefüllten Batterien erhöht wird.

Erfindungsgemäß verwendet man polyfluorierte Polyether der Formel I

X-CF₂O(CF₂O)ₘ-(CF₂CF₂O)ₙ-CF₂X (I),

worin
- X: H, F, C1 bis C5-alkyl oder teil- oder perfluoriertes C1-C5-alkyl oder COOR mit R gleich C1 bis C5-alkyl, teil- oder perfluoriertes C1 bis C5-alkyl oder OR mit R gleich C1 bis C5-alkyl, teil- oder perfluoriertes C1 bis C5-alkyl
- m: eine Zahl von 0 bis 5
- n: eine Zahl von 0 bis 5
ist oder deren Gemische, als eine Mischungskomponente in Elektrolytlösungen.

Die Difluormethylen- und die Tetrafluorethylengruppierungen können zufällig oder alternierend angeordnet oder verteilt sein.

Gegenstand der Erfindung ist somit ein Elektrolytsystem zur Erhöhung der Sicherheit von wiederaufladbaren Batterien, insbesondere Lithiumbatterien, das Verbindungen der Formel I in einer wirksamen Menge von 1 bis 80 Vol.-%, vorzugsweise 20 bis 60 Vol.-%, insbesondere 40 bis 60 Vor.-%, bezogen auf das Gesamtvolumen des Elektrolytsystems enthält. Hierbei sind Verbindungen der Formel I, in der X gleich H oder F, m und n eine Zahl von 0 bis 3 bedeuten, bevorzugt.

Es wurde festgestellt, daß die Verbindungen der Formel I in den Elektrolytlösungen insbesondere als Flammschutzmittel wirken.

Die genannten Polyfluorpolyether der Formel I können als Einzelsubstanz in Kombination mit anderen Lösungsmitteln oder als Gemisch von Ethern in Kombination mit anderen Lösungsmitteln für die Herstellung der Elektrolytlösungen eingesetzt werden.

Aufgrund ihrer niedrigen Viskosität lassen sie sich auch als "Verdünner" für die hochviskosen polaren Komponenten verwenden.

Es wurde weiterhin gefunden, daß die genannten Polyfluorpolyether mit den für Elektrolytlösungen üblichen Lösungsmitteln gut mischbar sind.

Es wurde gefunden, daß Elektrolytlösungen, die sowohl stark polare Komponenten, z. B. Ethylencarbonat, Propylencarbonat, niedrigviskose Solventien, z. B. Dimethylcarbonat und Leitsalz enthalten, durch Zusatz der Verbindung gemäß Formel I dem Sicherheitsstandard für wiederaufladbare Batterien Rechnung tragen.

Als Leitsalze werden bevorzugt Lithium-Salze verwendet. Gut brauchbar sind beispielsweise Lithiumhexafluorphosphat, Lithiumtetrafluorborat, Lithiumhexafluoroarsenat, Lithium-bisoxalato-borat sowie Lithiumsalze von Sulfonylimiden, beispielsweise das Lithiumsalz des Bis-(trifluormethansulfonyl)imids und von Sulfonylmethiden, beispielsweise das Lithiumsalz des Tris-(trifluormethansulfonyl)methids.

Üblicherweise liegen die Leitsalze in einer Konzentration von mindestens 0,5 mol/l im Lösungsmittel vor. Leitsalzkonzentrationen von etwa 1 mol/l werden angestrebt. Die Sättigungskonzentration gibt die obere Grenze der Leitsalzkonzentration an.

Die nachfolgenden Beispiele sollen die Erfindung weiter erläutern jedoch nicht einschränken.

### Beispiele

### Beispiele 1:

Zur Herstellung eines Lösungsmittelgemisches wurden 40 ml Dimethylcarbonat und 60 ml einer Mischung aus HF₂COCF₂CF₂OCF₂H, HF₂COCF₂OCF₂CF₂OCF₂H und HF₂CO(CF₂CF₂O)₂CF₂H vermischt. Das entstandene Lösungsmittelgemisch war einphasig.

### Beispiel 2:

Zur Herstellung eines weiteren Lösungsmittelgemisches wurden 30 ml Dimethylcarbonat, 10 g Ethylencarbonat und 60 ml einer Mischung aus HF₂COCF₂CF₂OCF₂H, HF₂COCF₂OCF₂CF₂OCF₂H und HF₂CO(CF₂CF₂O)₂CF₂H vermischt. Das entstandene Lösungsmittelgemisch war einphasig.

### Beispiel 3:

Zur Herstellung eines Elektrolyten wurden 30 ml Dimethylcarbonat, 10 g Ethylencarbonat und 60 ml einer Mischung aus HF₂COCF₂CF₂OCF₂H, HF₂COCF₂OCF₂CF₂OCF₂H und HF₂CO(CF₂CF₂O)₂CF₂H vermischt. In diesem Lösungsmittelgemisch wurden 7,6 g Lithiumhexafluorphosphat vollständig gelöst.

### Beispiel 4:

Zur Herstellung eines Elektrolyten wurden 30 ml Dimethylcarbonat, 10 g Ethylencarbonat und 60 ml einer Mischung aus HF₂COCF₂CF₂OCF₂H, HF₂COCF₂OCF₂CF₂OCF₂H und HF₂CO(CF₂CF₂O)₂CF₂H vermischt. In diesem Lösungsmittelgemisch wurden 14,3 g Lithium N,N-bis-(trifluormethylsulfonyl)-imid vollständig gelöst.

### Beispiel 5:

Es wurde versucht, die in den Beispiele 1, 2, 3 und 4 beschriebenen Lösungsmittelgemische und Elektrolyte mit offener Flamme zu entzünden. Die beschriebenen Lösungsmittelgemische und Elektrolyte erwiesen sich als nicht entflammbar.

## Patentansprüche

1. Verwendung von Polyfluorpolyethern der Formel (I)
X-CF₂O(CF₂O)ₘ-(CF₂CF₂O)ₙ-CF₂X (I),
worin
X H, F, C1- bis C5-alkyl oder teil- oder perfluoriertes C1 bis C5-alkyl oder COOR mit R gleich C1 bis C5-alkyl, teil- oder perfluoriertes C1 bis C5-alkyl oder OR mit R gleich C1 bis C5-alkyl, teil- oder perfluoriertes C1 bis C5-alkyl
m eine Zahl von 0 bis 5
n eine Zahl von 0 bis 5
bedeuten oder deren Gemische, als Flammschutzmittel in Lösungsmittelgemischen für Leitsalze in Elektrolytsysteme für wiederaufladbare Batterien.

2. Verwendung nach Anspruch 1 von Ethern der allgemeinen Formel I
X-CF₂O(CF₂O)ₘ-(CF₂CF₂O)ₙ-CF₂X (I),
worin
X H oder F und
m eine Zahl von 0 bis 3
n eine Zahl von 0 bis 3
bedeuten oder deren Gemische als Flammschutzmittel in Lösungsmittelgemischen für Leitsalze.

3. Verwendung von Ethern nach den Ansprüchen 1 und 2, **dadurch gekennzeichnet, daß** die Ether der Formel I in Mengen von 1 bis 80 Gew.-%, vorzugsweise 20 bis 60 Gew.-%, insbesondere 40 bis 60 Gew.-% bezogen auf das Gesamtvolumen des Elektrolytsystems, im Lösungsmittelgemisch enthalten sind.

## Claims

1. Use of polyfluoropolyethers of the formula (I)
X-CF₂O(CF₂O)ₘ-(CF₂CF₂O)ₙ-CF₂X (I)
where
X is H, F, C1-C5-alkyl or
partially fluorinated or perfluorinated C1-C5-alkyl or
COOR where R is C1-C5-alkyl, partially fluorinated or perfluorinated C1-C5-alkyl or
OR where R is C1-C5-alkyl, partially fluorinated or perfluorinated C1-C5-alkyl,
m is from 0 to 5,
n is from 0 to 5,
or mixtures thereof as flame retardants in solvent mixtures for electrolyte salts in electrolyte systems for rechargeable batteries.

2. Use according to Claim 1 of ethers of the general formula I
X-CF₂O(CF₂O)ₘ-(CF₂CF₂O)ₙ-CF₂X (I)
where
X is H or F and
m is from 0 to 3,
n is from 0 to 3,
or mixtures thereof as flame retardants in solvent mixtures for electrolyte salts.

3. Use of ethers according to Claim 1 or 2, **characterized in that** the ethers of the formula I are present in the solvent mixture in amounts of from 1 to 80 % by weight, preferably from 20 to 60 % by weight, in particular from 40 to 60 % by weight, based on the total volume of the electrolyte system.

## Revendications

1. Utilisation de polyfluoropolyéthers de formule (I)
X-CF₂O(CF₂O)ₘ-(CF₂CF₂O)ₙ-CF₂X (I),
où
X signifie H, F, C₁-C₅-alkyle ou
C₁-C₅-alkyle partiellement fluoré ou perfluoré ou COOR avec R représentant C₁-C₅-alkyle, C₁-C₅-alkyle partiellement fluoré ou perfluoré ou OR avec R représentant C₁-C₅-alkyle, C₁-C₅-alkyle partiellement fluoré ou perfluoré
m vaut un nombre de 0 à 5,
n vaut un nombre de 0 à 5,
ou leurs mélanges, comme agent ignifuge dans des mélanges de solvants pour sels conducteurs dans des systèmes électrolytiques pour piles rechargeables.

2. Utilisation selon la revendication 1 d'éthers de formule générale I
X-CF₂O(CF₂0)ₘ-(CF₂CF₂O)ₙ-CF₂X (I),
où
X signifie H ou F et
m vaut un nombre de 0 à 3,
n vaut un nombre de 0 à 3,
ou leurs mélanges comme agent ignifuge dans des mélanges de solvants pour sels conducteurs.

3. Utilisation d'éthers selon les revendications 1 et 2, **caractérisée en ce que** les éthers de formule I sont contenus en des quantités de 1 à 80 % en poids, de préférence de 20 à 60 % en poids, en particulier de 40 à 60 % en poids par rapport au volume total du système électrolytique, dans le mélange de solvants.
